# FASCICULE DE BREVET EUROPEEN

(11) **EP 1 847 380 B1**
(45) Date de publication et mention de la délivrance du brevet: **24.06.2009**
(21) Numéro de dépôt: 07106430.7
(22) Date de dépôt: 18.04.2007
(51) Int. Cl.: B29D 30/24

(54) **Perfectionnement d'un tambour d'assemblage destiné à la fabrication des pneumatiques autoporteurs**
Verbesserung einer Montagetrommel, die zur Herstellung von selbsttragenden Reifen konzipiert ist
Improvement of an assembly drum designed for the production of self-supporting tyres

(30) Priorité: 21.04.2006 FR 0603695
(43) Date de publication de la demande: 24.10.2007
(73) Titulaire: Société de Technologie Michelin, 63000 Clermont-Ferrand (FR); Michelin Recherche et Technique S.A., 1763 Granges-Paccot (CH)
(72) Inventeur: De Laubier, Antoine, 63200 Riom (FR); Delbecque, Benoit, 63200 Clermont-Ferrand (FR)
(74) Mandataire: Lasson, Cédric Y. M.

(56) Documents cités:
- EP-A1- 1 512 524
- EP-A2- 0 634 266
- EP-A2- 1 295 703
- US-A1- 2002 088 551

## Description

L'invention concerne les tambours d'assemblage destinés en particulier à la fabrication des pneumatiques dits autoporteurs. Ces pneumatiques permettent à l'utilisateur de poursuivre son trajet sur une certaine distance lorsque la pression à l'intérieur de l'enveloppe est réduite ou nulle.

La construction de ces pneumatiques se caractérise par le fait qu'ils comportent des profilés caoutchoutiques de forte épaisseur disposés dans les flancs, et généralement placés entre la gomme d'étanchéité et la ou les nappes de renfort carcasse. Ces produits ont pour fonction, de supporter la charge lorsque la pression de l'air dans l'enveloppe ne permet plus d'assurer cette fonction.

Du fait de cette disposition, la construction de ce type de pneumatique requière des dispositions particulières pour assurer une jonction correcte entre les différents profilés, et toutes les dispositions doivent être prises pour éviter d'emprisonner de l'air entre les différents profilés, en particulier lorsqu'il est fait usage d'un tambour cylindrique.

En effet, lors de la pose des profilés de forte épaisseur à l'emplacement axial correspondant à la zone des flancs, on observe que le profil méridien servant de surface de réception à la nappe de renfort carcasse est relativement tourmenté. Ceci a pour effet de favoriser l'emprisonnement d'air entre la nappe de renfort carcasse et les profilés situés radialement en dessous

Une solution permettant de résoudre ce problème a été proposée dans la publication EP 634 266.

Des gorges sont disposées sur la surface de réception du tambour, et espacées axialement de manière à être positionnées sensiblement au dessous de la zone de pose des profilés de forte épaisseur. De cette manière, en déterminant de façon appropriée la forme de la gorge, il devient possible d'obtenir une surface de pose de la nappe de renfort carcasse sensiblement cylindrique. Le profilé de forte épaisseur épouse le profil de ladite gorge de telle manière que sa surface radialement extérieure soit sensiblement alignée avec la surface extérieure généralement cylindrique du tambour d'assemblage.

Toujours selon la publication EP 634 266, et lorsqu'il est fait usage de tambour d'assemblage à diamètre variable, la gorge peut contenir des membranes ou des corps élastiques disposés circonférentiellement. La forme de la membrane ou du corps élastique est adaptée pour conférer au tambour un profil extérieur généralement cylindrique lorsque le tambour est placé à son premier diamètre de pose et que la dite membrane est gonflée ou que le corps élastique ne subit aucune contrainte élastique. Cet arrangement particulier permet de combler la dépression formée par la gorge lors de la pose de la gomme d'étanchéité et du profilé de forte épaisseur, et permet d'effectuer la pose desdits profilés sur un tambour ayant une forme généralement cylindrique.

La pose des profilés suivants s'effectue généralement après avoir porté le tambour à un second diamètre de pose. Au cours de cette opération, la membrane ou le corps élastique se comprime sous l'effet des forces élastiques et vient se plaquer contre le fond de la gorge. Le profilé de forte épaisseur et la gomme d'étanchéité épousent alors le nouveau profil de la gorge.

On s'arrange pour que, à l'issue de cette première conformation, la surface radialement externe du profilé de forte épaisseur soit alignée avec la surface de pose du tambour pour former une surface de réception de nouveau généralement cylindrique de manière à ce que la pose de la nappe de renfort carcasse puisse s'effectuer sur une surface exempte de zones susceptibles d'enfermer de l'air.

La poursuite des opérations d'assemblage peut alors se faire de manière tout à fait classique et connue de l'homme du métier et qui consiste à déposer par exemple la gomme de remplissage talon et les anneaux de renfort des talons, puis à procéder à une seconde expansion du tambour jusqu'à un troisième diamètre de pose de manière à ancrer les anneaux de renfort des talons, et à autoriser le retournement des extrémités de la nappe de renfort carcasse autour des anneaux de renfort des talons.

Toutefois la mise au point des membranes ou des corps élastiques s'avère particulièrement délicate pour obtenir une surface de pose stable lorsque le tambour est positionné au premier diamètre de pose. On observe en effet que la tension de pose du profilé de forte épaisseur s'appliquant sur la surface de réception située axialement au droit du corps élastique a pour effet de comprimer ledit corps élastique et de modifier sensiblement le diamètre de pose.

De plus, lorsque l'on souhaite obtenir une gorge présentant un profil méridien particulier, adapté au profil transversal du profilé de forte épaisseur ou encore lorsque l'on désire modifier la distance axiale entre les anneaux de renforcement des talons il est nécessaire de faire des adaptations dimensionnelles nécessitant un ajustement précis des forces de rappel élastiques et donc des matériaux utilisés pour la réalisation du corps élastiques.

L'invention a pour objet de proposer un perfectionnement au type de tambour tel que décrit ci-dessus, de manière à résoudre le problème posé.

Le tambour selon l'invention est défini dans la revendication 1. Des formes avantageuses de l'invention font l'objet des revendications dépendantes.

Le tambour d'assemblage à diamètre variable selon l'invention possède une surface de pose généralement cylindrique munie de gorges circulaires disposées axialement dans une zone destinée à recevoir des profilés de forte épaisseur. Lesdites gorges contiennent des corps élastiques circonférentiels.

Ce tambour est caractérisé en ce que lorsque le tambour est amené à un premier diamètre de pose, un moyen mécanique écarte le corps élastique du fond de la gorge de manière à aligner la surface radialement externe du corps élastique avec la surface de pose du tambour

De cette manière il est possible de s'affranchir des forces de déformation radiales liées à la tension de pose des profilés disposés radialement au droit du corps élastique et d'éviter ainsi toute modification non voulue du diamètre de pose.

En utilisant des matériaux élastiques sensiblement incompressibles pour la réalisation des corps élastiques, il est possible de contrôler avec une bonne précision le profil extérieur du corps élastique lorsque le tambour est placé à un second diamètre de pose, supérieur au premier diamètre de pose, et que le corps élastique est plaqué contre le fond de la gorge, de manière à ce que la surface radialement externe du profilé de forte épaisseur forme avec la surface du tambour une surface généralement cylindrique

La description qui suit s'appuie sur les figures 1 à 12 et permet d'illustrer un mode de réalisation préférentiel de l'invention, dans laquelle :
- la figure 1 représente une vue schématique en coupe méridienne d'un tambour d'assemblage selon l'invention placé à son premier diamètre de pose,
- la figure 2 représente une vue schématique en coupe méridienne d'un tambour d'assemblage selon l'invention placé à un second diamètre de pose,
- la figure 3 représente une vue schématique en coupe méridienne d'un tambour d'assemblage selon l'invention placé à un troisième diamètre de pose,
- Les médaillons 3a et 3b représentent une vue schématique axiale et en coupe méridienne d'une tête de tige.
- les figures 4, 5 et 6 représentent une vue schématique d'une alternative de montage des tiges,
- les figures 7, 8 et 9 ainsi que les figures 10, 11 et 12 illustrent schématiquement deux séquences de pose des produits profilés destinés à réaliser une ébauche de pneumatique, dans lesquelles les corps élastiques ont des profils différents.

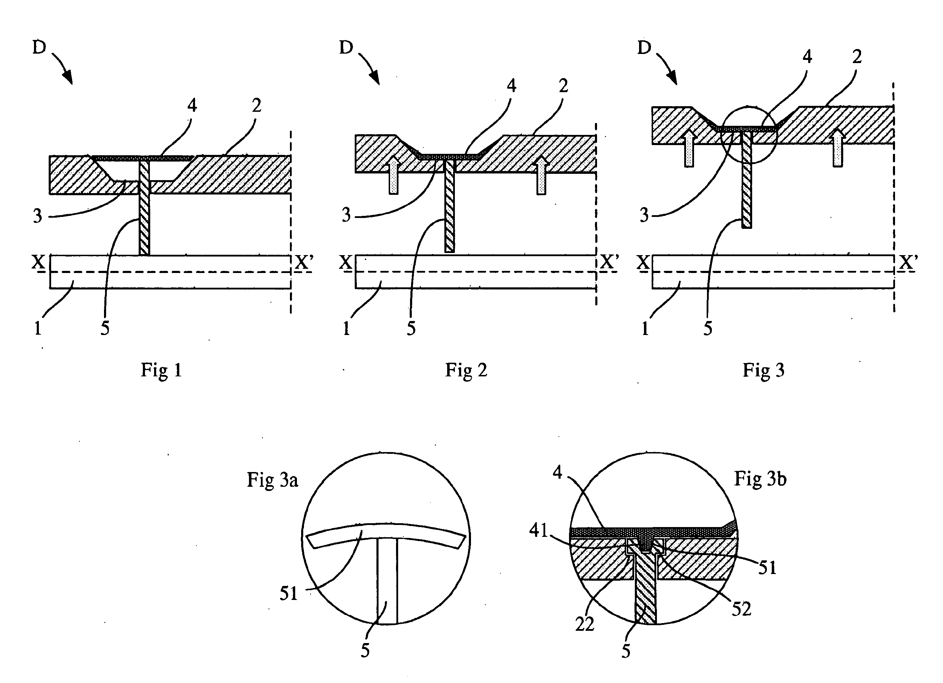

La figure 1 représente une section méridienne de la demi-moitié d'un tambour d'assemblage D d'axe de rotation XX'. Ce tambour comprend une surface de pose 2 de forme généralement cylindrique. Une gorge circonférentielle 3 est pratiquée à chacune des extrémités axiales du tambour, à l'emplacement destiné à recevoir lesdits produits profilés de forte épaisseur.

Le tambour est entraîné en rotation par un ensemble motorisé (non représenté) par l'intermédiaire d'un arbre 1.

Un ensemble de tiges 5, coulissant librement dans la direction radiale par rapport aux éléments mécaniques formant la surface de diamètre variable du tambour, sont reliées par une de leurs extrémités à la circonférence radialement interne d'un corps élastique circonférentiel 4, et prennent appui par l'autre extrémité sur la surface extérieure de l'arbre 1 qui fait office de butée circonférentielle destinée à limiter la course de la tige vers l'intérieur du tambour D.

Les tiges sont placées, à un espacement donné les unes des autres, sur toute la circonférence du corps élastique 4.

La longueur de chacune des tiges est ajustée de manière, lorsque le tambour est placé au premier diamètre de pose comme cela est illustré à la figure 1, à ce que d'une part la tige prenne appui sur la butée circonférentielle formée par l'arbre 1 du tambour D, et que d'autre part, la surface radialement extérieure du corps élastique 4 soit disposée au même diamètre que la surface de pose 2 du tambour D.

A ce premier diamètre de pose, le corps élastique 4 est soumis à une légère tension de manière à maintenir le contact entre la tête de la tige 52 et entraîner la mise en contact des tiges 5 avec la butée circonférentielle 1.

La figure 2 représente le tambour placé à un second diamètre de pose, supérieur au premier diamètre de pose. Dans cette configuration, la tige 5 perd le contact avec la butée circonférentielle 1 et le corps élastique 4 est entraîné, sous l'action des forces élastiques, vers le fond de la gorge 3 contre lequel il vient se plaquer.

La surface radialement extérieure du corps élastique est située en dessous de la surface cylindrique 2 et forme un creux dont le profil est dépendant de la forme spécifique de la gorge 3 et du corps élastique 4.

Une extension supplémentaire du diamètre du tambour, comme illustrée à la figure 3, n'entraîne pas de déplacement sensible du corps élastique qui reste plaqué contre le fond de la gorge 3. La tige 5 demeure suspendue au corps élastique à laquelle elle est liée.

Le corps élastique 4 est formé d'un matériau généralement caoutchoutique renforcé si nécessaire par une ou deux nappes croisées déformables ou encore par une nappe à 90°, placées sur la surface radialement extérieure dudit corps élastique dans le but de rigidifier cette surface et de répartir les efforts, lorsque le tambour est placé au premier diamètre de pose.

La liaison entre les corps élastiques et les tiges peut être réalisé très simplement, de manière à autoriser le changement du corps élastique sans occasionner de perturbation majeure du cycle de production comme l'illustrent les médaillons 3a et 3b de la figure 3.

La tige 5, comporte à son extrémité coopérant avec le corps élastique, une tête 51 adaptée pour reposer dans un logement 22 pratiqué au fond de la gorge 3 comme cela est illustré sur le médaillon 3b.

Cette configuration de montage particulier permet de limiter la course radiale de la tige lorsqu'elle n'est plus en contact avec la butée circonférentielle 1. La liaison entre la tête de la tige et le corps élastique se fait par un simple emboîtement d'une protubérance 41 disposée sur le corps élastique 4 dans une rainure 51 réalisée dans la tête 52 de la tige 5.

La pose et la dépose du corps élastique 4 peuvent donc se faire comme la pose et la dépose d'un simple manchon élastique qu'il suffit d'amener axialement en position en jouant sur l'élasticité du matériau. Une fois en place, les protubérances 41 se positionnent dans les rainures 51 de manière à assurer le contrôle de la position axiale du corps élastique. Le contact entre la tête de la tige et le corps élastique est assuré par la mise en tension du corps élastique ce qui a pour effet d'exercer des forces de compression radiales qui s'appliquent sur les têtes des tiges.

Le médaillon 3a illustre une vue axiale de la tige 5 dans laquelle la tête 51 de la tige forme un secteur circonférentiel dont le rayon est sensiblement égal au rayon du tambour lorsque le tambour est placé au premier diamètre de pose, de telle manière que le corps élastique soit soutenu sur la majeure partie de sa circonférence lorsque le tambour est placé dans cette première configuration.

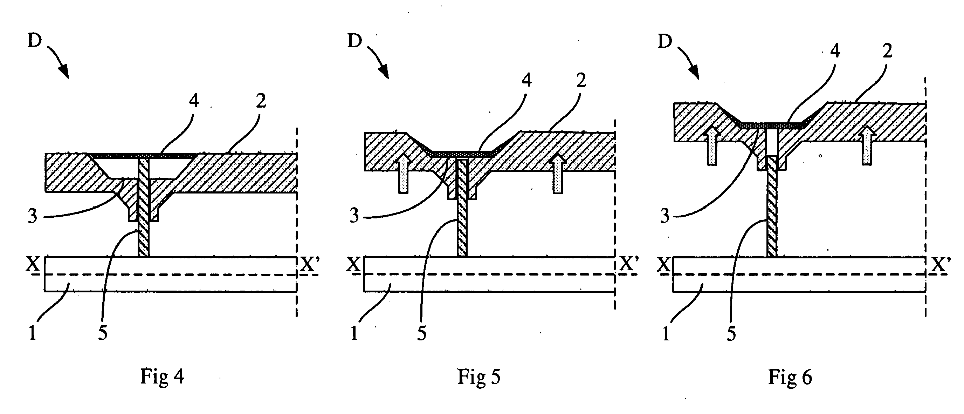

Une alternative de construction consiste à rendre les tiges 5 solidaires de la butée circonférentielle 1 comme cela est illustré aux figures 4, 5 et 6.

Dans cette configuration, la tige coulisse par rapport aux éléments mécaniques définissant la surface 2 du tambour à diamètre variable et vient au contact de la circonférence radialement interne du corps élastique 4 lorsque le tambour est placé au premier diamètre de pose.

Dans cette disposition particulière, il est également possible d'améliorer le contact entre les têtes de tige et le corps élastique en reliant les dites têtes de tige par une couronne circonférentielle (non représentée).

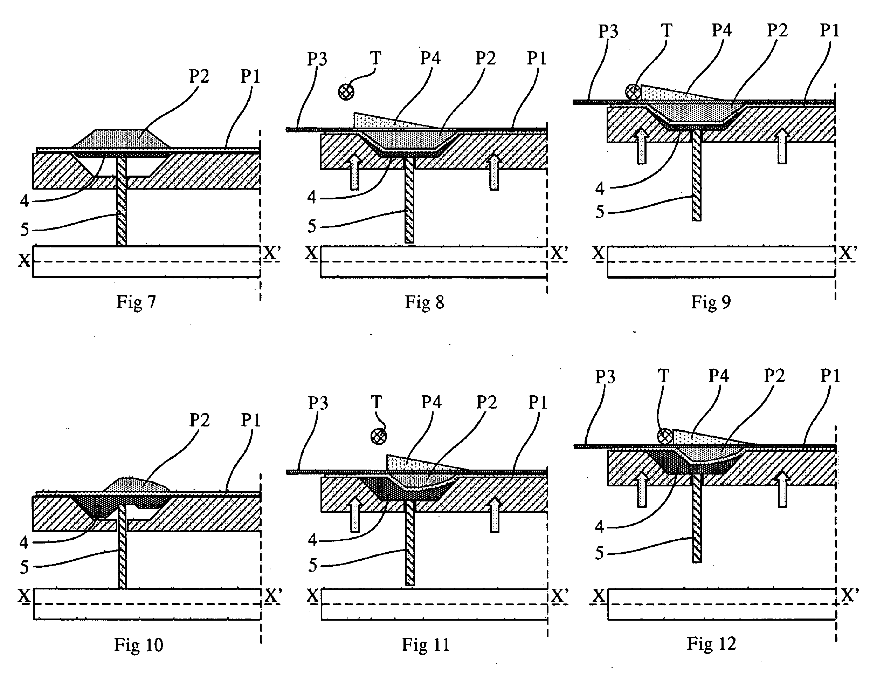

Les figures 7, 8 et 9 ainsi que les figure 10, 11 et 12, illustrent une séquence de pose des profilés caoutchoutiques aboutissant à la réalisation d'une ébauche de pneumatique.

Le tambour est placé au premier diamètre de pose comme cela est illustré à la figure 7 ou encore à la figure 10. Dans cette configuration la surface du tambour et du corps élastique 4 ont une forme généralement cylindrique.

On procède à la pose de la gomme d'étanchéité P1 puis du profilé de forte épaisseur P2. Le profilé P2 est disposé au droit de la gorge 3. La surface du corps élastique 4 est maintenue au diamètre de la surface du tambour par les tiges 5 qui reposent sur la butée circonférentielle 1. Les forces de pression exercées par la tension de pose du profilé P2 sont reprises par les tiges et transmises à la butée circonférentielle 1.

Lorsque le tambour est placé au second diamètre de pose, le corps élastique 4 vient se plaquer contre le fond de la gorge 3, libérant ainsi un volume dans lequel vient se loger le profilé de forte épaisseur P1, comme cela est illustré aux figures 8 et 11. En comparant ces deux figures on observe qu'il est possible d'adapter le profil transversal du corps élastique de manière à ce que la surface radialement extérieure du profilé de forte épaisseur P2 soit disposée au même diamètre que la surface cylindrique du tambour 2.

A cette étape on dépose la nappe de renfort carcasse P3 ainsi que le profilé de rembourrage du talon P4. L'anneau de renforcement du talon est pré positionné à l'aide d'un moyen adapté et connu de l'homme de l'art.

La pose de la nappe de renfort carcasse P3 s'effectue sur une surface sensiblement cylindrique, ce qui permet de prévenir l'occlusion d'air entre la nappe de renfort P3 et la gomme d'étanchéité P1.

On observe qu'il est également possible de faire varier la position axiale de l'anneau de renfort talon ainsi que celle des profilés, en adaptant judicieusement la forme du profil transversal du corps élastique 4. Cette disposition est d'une grande utilité lorsque l'on désire réaliser des pneumatiques présentant des longueurs entre talons variées.

La troisième variation de diamètre a pour but de venir ancrer l'anneau de renfort talon comme cela est illustré aux figures 9 et 12.

L'achèvement de la construction de l'ébauche de la carcasse se poursuit alors de façon tout à fait classique comme cela a déjà été dit plus haut, par le retournement de la nappe de renfort carcasse autour des anneaux de renfort talon, puis par la pose des profilés destinés à former le flanc du pneumatique.

Les séquences de fabrication sont identiques lorsque l'on utilise un tambour du type de celui illustré aux figures 4, 5 et 6.

Par ailleurs, les séquences de fabrication servant à illustrer le mode de fonctionnement du tambour selon l'invention s'appuient sur une construction de pneumatique relativement simple. Il est aisé de comprendre qu'un tambour conforme à l'invention est également adapté à la réalisation d'architectures plus complexes comme des pneumatiques comprenant plusieurs nappes de renfort carcasse superposées avec un ou plusieurs profilés de forte épaisseur P1, (P'1, non représenté).

## Revendications

1. Tambour d'assemblage à diamètre variable D, destiné à la fabrication d'une ébauche de pneumatique, le tambour possédant une surface de pose (2) généralement cylindrique munie de gorges circulaires (3) disposées axialement dans une zone destinée à recevoir des profilés de forte épaisseur (P2), lesdites gorges (3) contenant des corps circonférentiels élastiques (4), **caractérisé en ce que**, lorsque le tambour D est amené à un premier diamètre de pose, un moyen mécanique écarte radialement le corps élastique (4) du fond de la gorge (3), de manière à aligner la surface radialement externe du corps élastique (4) avec la surface de pose du tambour (2).

2. Tambour d'assemblage selon la revendication 1 dans lequel le corps élastique (4) vient se plaquer contre le fond de la gorge (3) sous l'effet des tensions élastiques circonférentielles, lorsque le tambour est placé à un diamètre de pose supérieur audit premier diamètre de pose.

3. Tambour d'assemblage selon la revendication 2 dans lequel le profil transversal du corps élastique (4) est déterminée de manière à ce que, lorsque le tambour est placé à un second diamètre de pose, supérieur au premier diamètre de pose, et que le profilé de forte épaisseur (P2) est disposé sur le tambour d'assemblage, la surface radialement externe dudit profilé (P2) forme avec la surface de pose (2) du tambour une surface généralement cylindrique.

4. Tambour d'assemblage selon la revendication 2 dans lequel le corps élastique (4) est sensiblement incompressible.

5. Tambour d'assemblage selon l'une des revendications 1 à 4 dans lequel le moyen mécanique est formé par une pluralité de tiges (5) disposées circonférentiellement, et dont la longueur est ajustée de manière à ce que, lorsque le tambour est amené à son premier diamètre de pose, les deux extrémités desdites tiges (5) viennent en butée respectivement avec une butée circonférentielle (1) de diamètre constant et avec la surface radialement interne du corps élastique (4).

6. Tambour d'assemblage selon la revendication 5 dans lequel les têtes de tige (51) forment un secteur circonférentiel.

7. Tambour d'assemblage selon la revendication 5 ou 6 dans lequel les tiges (5) et les éléments formant la surface de diamètre variable (2) coulissent librement l'un par rapport à l'autre.

8. Tambour d'assemblage selon la revendication 5 ou 6 dans lequel les tiges (5) sont solidaires de la butée circonférentielle (1).

## Claims

1. An assembly drum of variable diameter D, intended for the manufacture of a tyre blank, the drum having a generally cylindrical laying surface (2) provided with circular grooves (3) arranged axially in a zone intended to receive profiled elements of great thickness (P2), said grooves (3) containing elastic circumferential bodies (4), **characterised in that,** when the drum D is moved to a first laying diameter, a mechanical means moves the elastic body (4) radially apart from the bottom of the groove (3), so as to align the radially outer surface of the elastic body (4) with the laying surface of the drum (2).

2. An assembly drum according to Claim 1, in which the elastic body (4) is flattened against the bottom of the groove (3) under the effect of the circumferential elastic tensions when the drum is positioned at a laying diameter greater than said first laying diameter.

3. An assembly drum according to Claim 2, in which the transverse profile of the elastic body (4) is determined such that, when the drum is positioned at a second laying diameter, greater than the first laying diameter, and the profiled element of great thickness (P2) is arranged on the assembly drum, the radially outer surface of said profiled element (P2) forms a generally cylindrical surface with the laying surface (2) of the drum.

4. An assembly drum according to Claim 2, in which the elastic body (4) is substantially incompressible.

5. An assembly drum according to one of Claims 1 to 4, in which the mechanical means is formed by a plurality of rods (5) arranged circumferentially, and the length of which is adjusted such that, when the drum is moved to its first laying diameter, the two ends of said rods (5) butt up respectively against a circumferential stop (1) of constant diameter and the radially inner surface of the elastic body (4).

6. An assembly drum according to Claim 5, in which the rod heads (51) form a circumferential sector.

7. An assembly drum according to Claim 5 or 6, in which the rods (5) and the elements forming the surface of variable diameter (2) slide freely relative to one another.

8. An assembly drum according to Claim 5 or 6, in which the rods (5) are integral with the circumferential stop (1).

## Patentansprüche

1. Montagetrommel mit variablem Durchmesser D, die zur Herstellung eines Luftreifenrohlings bestimmt ist, wobei die Trommel eine allgemein zylindrische Aufbringfläche (2) besitzt, die mit kreisförmigen Rillen (3) versehen ist, welche axial in einer Zone angeordnet sind, die dazu bestimmt ist, Profilteile mit großer Dicke (P2) aufzunehmen, wobei die Rillen (3) elastische Umfangskörper (4) enthalten, **dadurch gekennzeichnet, dass**, wenn die Trommel D auf einen ersten Aufbringdurchmesser gebracht wird, eine mechanische Einrichtung den elastischen Körper (4) radial vom Grund der Rille (3) entfernt, um die radial äußere Fläche des elastischen Körpers (4) mit der Aufbringfläche der Trommel (2) in Flucht zu bringen.

2. Montagetrommel nach Anspruch 1, bei der der elastische Körper (4) sich unter der Wirkung der elastischen Umfangsspannungen gegen den Grund der Rille (3) drückt, wenn die Trommel auf einen Aufbringdurchmesser gebracht wird, der größer ist als der erste Aufbringdurchmesser.

3. Montagetrommel nach Anspruch 2, bei der das Querprofil des elastischen Körpers (4) so bestimmt wird, dass, wenn die Trommel auf einen zweiten Aufbringdurchmesser größer als der erste Aufbringdurchmesser gebracht wird, und wenn das Profilteil großer Dicke (P2) auf der Montagetrommel angeordnet ist, die radial äußere Fläche des Profilteils (P2) mit der Aufbringfläche (2) der Trommel eine allgemein zylindrische Fläche bildet.

4. Montagetrommel nach Anspruch 2, bei der der elastische Körper (4) im Wesentlichen nicht komprimierbar ist.

5. Montagetrommel nach einem der Ansprüche 1 bis 4, bei der die mechanische Einrichtung von mehreren in Umfangsrichtung angeordneten Stangen (5) gebildet wird, deren Länge so angepasst ist, dass, wenn die Trommel auf ihren ersten Aufbringdurchmesser gebracht wird, die zwei Enden der Stangen (5) mit einem Umfangsanschlag (1) mit konstantem Durchmesser bzw. mit der radial inneren Fläche des elastischen Körpers (4) in Anschlag kommen.

6. Montagetrommel nach Anspruch 5, bei der die Stangenköpfe (51) einen Umfangssektor bilden.

7. Montagetrommel nach Anspruch 5 oder 6, bei der die Stangen (5) und die die Fläche mit variablem Durchmesser (2) bildenden Elemente frei zueinander gleiten.

8. Montagetrommel nach Anspruch 5 oder 6, bei der die Stangen (5) fest mit dem Umfangsanschlag (1) verbunden sind.
